# FASCICULE DE BREVET EUROPEEN

(11) **EP 4 081 740 B1**
(45) Date de publication et mention de la délivrance du brevet: **06.09.2023**
(21) Numéro de dépôt: 21702505.5
(22) Date de dépôt: 04.02.2021
(51) Int. Cl.: F24F 3/16, F24F 13/06, F24F 13/20, F24F 13/28, B01D 46/00, F24F 8/10

(54) **MEUBLE DESTINÉ À LA PURIFICATION DE L'AIR**
MÖBELSTÜCK ZUR LUFTREINIGUNG
ITEM OF FURNITURE INTENDED FOR AIR PURIFICATION

(30) Priorité: 07.02.2020 FR 2001202
(43) Date de publication de la demande: 02.11.2022
(73) Titulaire: Airinspace, 78990 Elancourt (FR)
(72) Inventeur: CHATENET, Stéphane, 78990 ELANCOURT (FR)
(74) Mandataire: Barbot, Willy
(86) Numéro de dépôt international: PCT/EP2021/052604
(87) Numéro de publication internationale: WO 2021/156335

(56) Documents cités:
- EP-A1- 0 831 279
- EP-A1- 1 433 514
- EP-B1- 0 831 279
- EP-B1- 1 433 514
- CN-A- 107 763 764
- CN-A- 108 286 759
- CN-A- 108 497 699
- CN-A- 109 674 206

## Description

La présente demande de brevet revendique la priorité de la demande de brevet Français FR20/01202 déposée le 7 février 2020.

### Domaine technique

La présente invention appartient au domaine de la purification de l'air, et concerne un meuble destiné à la purification de l'air, un procédé de filtration de l'air, ainsi que l'utilisation d'un meuble pour la filtration de l'air.

### Art antérieur

Il est connu de la demande de brevet EP 1433514 A un meuble qui permet de purifier l'air et prenant la forme d'un caisson sensiblement fermé qui comprend au moins un plateau supérieur d'utilisation, des parois latérales tombant à l'aplomb de ce plateau, au moins une source de puissance électrique, au moins un moyen de mise en surpression de l'air relié à la source de puissance et permettant d'assurer l'écoulement de l'air à travers le caisson, et au moins un filtre en position horizontale, parallèle au plateau supérieur d'utilisation et situé en amont du moyen de mise en surpression de l'air.

Il est également connu de la demande de brevet CN 107763764 A un meuble destiné à la purification de l'air et prenant la forme d'un caisson sensiblement fermé comprenant au moins une face supérieure, des parois latérales tombant à l'aplomb de cette face et au moins une ouverture dans la partie supérieure des parois latérales qui permet l'entrée de l'air vers l'intérieur du caisson.

### Exposé de l'invention

Les inventeurs ont maintenant développé un meuble qui, outre offrir une surface d'utilisation, permet de purifier l'air de la pièce dans lequel il est placé.

Un premier objet de l'invention concerne un meuble (10) destiné à la purification de l'air et prenant la forme d'un caisson sensiblement fermé comprenant :
- a) au moins un plateau supérieur d'utilisation (11), lequel présente de préférence un contour rectangulaire,
- b) des parois latérales (12) tombant à l'aplomb de ce plateau,
- c) au moins une ouverture (14) dans la partie supérieure des parois latérales (12), laquelle permet l'entrée de l'air (A) vers l'intérieur du caisson,
- d) au moins une ouverture (16) dans la partie basse du caisson, de préférence derrière les parois latérales (12), laquelle au moins une ouverture (16) permet la sortie de l'air filtré (B) dans le caisson,
- e) au moins une source de puissance électrique,
- f) au moins un moyen de mise en surpression (22) de l'air relié à la source de puissance et permettant d'assurer l'écoulement de l'air (A) à travers le caisson,
- g) au moins un filtre en position horizontale (21), parallèle au plateau supérieur d'utilisation (11) et situé en amont du moyen de mise en surpression (22) de l'air,
- h) au moins un filtre en positon verticale (23), perpendiculaire au plateau supérieur d'utilisation (11) et situé en aval du moyen de mise en surpression (22) de l'air, lequel est distant d'au moins 3 cm de la paroi latérale (12) la plus proche,
- i) au moins un conduit (15) entre l'au moins un filtre (23) situé en aval du moyen de mise en surpression (22) de l'air et la paroi latérale (12) la plus proche, lequel conduit (15) permet l'évacuation de l'air (A) filtré vers l'ouverture (16) dans la partie basse du caisson.

Un tel meuble (10) est capable, malgré des dimensions contenues (hauteur maximum : 1 000 mm, largeur maximum : 800 mm, profondeur maximum : 600 mm), de purifier efficacement l'air d'une pièce tout en étant extrêmement discret du fait du silence de fonctionnement résultant de sa structure améliorée.

Avantageusement, un meuble (10) selon l'invention a une hauteur comprise entre 600 mm et 1 000 mm, de préférence entre 800 mm et 950 mm, de manière encore plus préférée entre 850 mm et 900 mm ; une largeur de 500 mm à 800 mm, de préférence 550 mm à 700 mm, de manière encore plus préférée de 600 mm à 650 mm ; et une profondeur de 300 mm à 600 mm, de préférence 400 à 550 mm, de manière encore plus préférée de 450 à 500 mm.

Toujours avantageusement, un meuble (10) selon l'invention est apte à traiter l'air d'une pièce ayant un volume de maximum 100 m³, de préférence 80 m³, de manière encore plus préférée 75 m³.

Avantageusement, le moyen de surpression de l'air d'un meuble (10) selon l'invention permet d'obtenir un débit de fonctionnement compris entre 100 et 5 000 m³/h, de préférence entre 200 et 2 000 m³/h.

Selon un mode de réalisation particulier, un meuble (10) selon l'invention est destiné à être placé à distance des murs, et l'ensemble de ses parois latérales (12) comprennent une ouverture dans leur partie supérieure et, de préférence, une ouverture dans la partie basse du caisson derrière chacune d'elle.

Selon un autre mode de réalisation particulier, un meuble (10) selon l'invention est destiné à être placé contre un mur, et la paroi latérale (12) destinée à être placé contre ledit mur peut ne comprendre aucune ouverture dans sa partie supérieure et, de préférence, aucune ouverture dans la partie basse du caisson derrière elle.

De manière avantageuse, au moins une des parois latérales (12) d'un meuble (10) selon l'invention est mobile et apte à permettre l'accès à l'intérieur du caisson, de préférence à permettre d'accéder et de remplacer les filtres disposés à l'intérieur du caisson.

Selon un mode de réalisation particulier, un meuble (10) selon l'invention comprend au moins deux filtres (23), de préférence au moins trois filtres (23) en position verticale, lesquels sont perpendiculaires au plateau d'utilisation et situé en aval du moyen de mise en surpression (22) de l'air.

Selon un autre mode de réalisation particulier, un meuble (10) selon l'invention comprend en outre :
- j) au moins un ionisateur relié à la source de puissance, lequel ionisateur est situé de préférence entre l'au moins un filtre en position horizontale (21) et l'au moins un filtre en position horizontale (23).

Selon un mode de réalisation alternatif, un meuble (10) selon l'invention comprend en outre au moins une enceinte (31) reliée à la source de puissance électrique.

Un second objet de l'invention concerne un procédé de filtration de l'air caractérisé en ce qu'il comprend au moins les étapes suivantes :
- i) mise en place d'un meuble (10) selon l'invention dans une pièce, et
- ii) mise en route du moyen de surpression(22) de l'air relié à la source de puissance.

Un troisième objet de l'invention concerne une utilisation d'un meuble (10) selon l'invention pour la filtration de l'air.

### Brève description des dessins

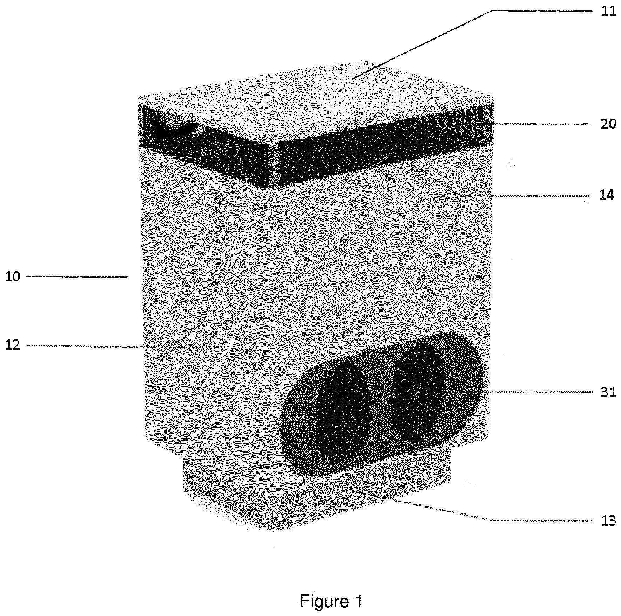

[Fig 1] représente un mode de réalisation particulier d'un meuble (10) selon l'invention.

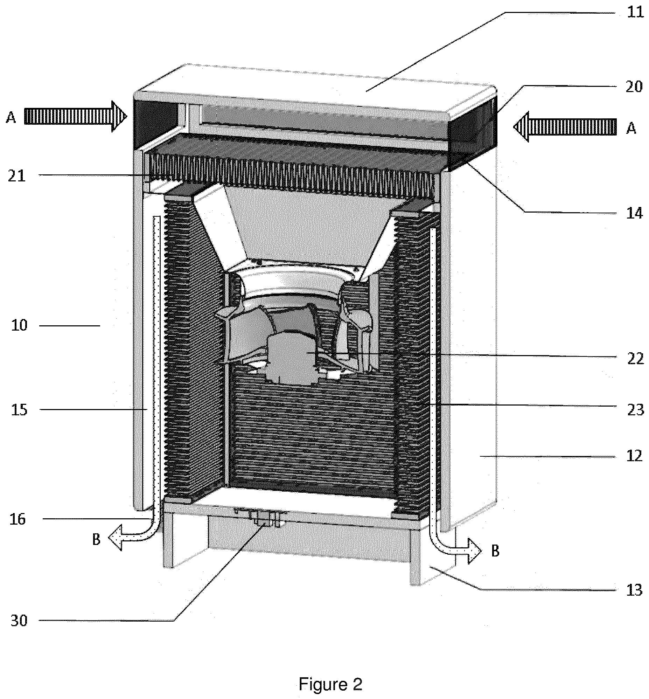

[Fig 2] est une vue schématique en coupe de face d'un meuble (10) selon l'invention en fonctionnement.

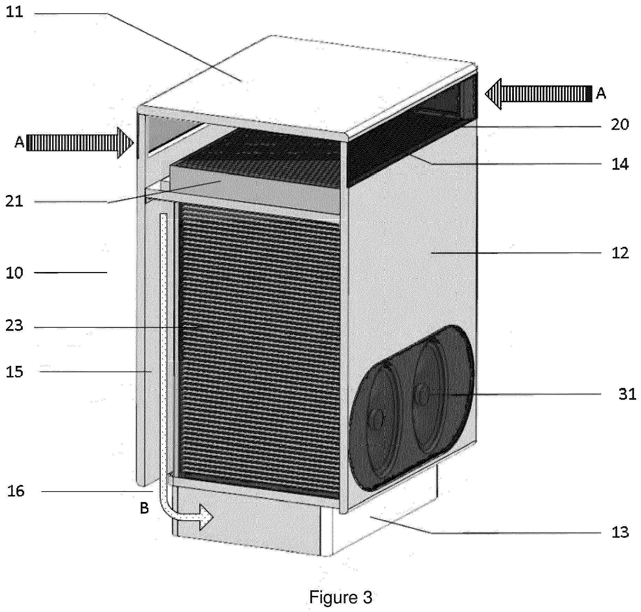

[Fig 3] est une vue schématique en coupe de côté d'un meuble (10) selon l'invention en fonctionnement.

D'autres caractéristiques, détails et avantages de l'invention ressortiront plus clairement de la description détaillée donnée ci-après à titre indicatif en relation avec des dessins sur lesquels :

### Description détaillée de l'invention

Selon un premier aspect, l'invention concerne un meuble (10) destiné à la purification de l'air. Par « meuble », on entend au sens de la présente invention un objet concourant à l'aménagement et à la décoration d'un local, prenant la forme d'un caisson sensiblement fermé. A titre d'illustration, et de manière non exhaustive, un meuble (10) selon l'invention peut prendre la forme d'une console, d'une commode, d'un guéridon, d'une table, d'une table de chevet, d'une table basse, etc.

Par « purification de l'air », on entend l'obtention d'un air ambiant de bonne qualité. La bonne qualité de l'air ambiant peut être évaluée sur la base de différents paramètres, et à titre d'exemple la concentration en composés organiques volatils (COV), la concentration en particules fines, telle que la concentration en particules fines dont le diamètre est inférieur à 10 µm (PM 10) et/ou la concentration en particules fines dont le diamètre est inférieur à 2,5 µm (PM 2.5), etc.

Un meuble (10) selon l'invention comprend un plateau supérieur d'utilisation (11). On entend par « plateau supérieur d'utilisation » une surface plane, présentant de préférence un contour rectangulaire permettant la dépose, le stockage ou le rangement d'objet par l'utilisateur. Avantageusement, les dimensions du meuble (10) sont choisies de telle sorte à ce que ledit plateau supérieur d'utilisation (11) soit à portée de main de l'utilisateur, c'est-à-dire à une hauteur comprise entre 50 cm et 130 cm, de préférence entre 60 et 100 cm.

Un meuble (10) selon l'invention comprend avantageusement un socle (13), qui constitue la base sur laquelle repose le meuble (10) selon l'invention, et dont la surface est inférieure à celle du plateau supérieur d'utilisation (11). Avantageusement, la longueur et la largeur du socle (13) d'un meuble (10) selon l'invention sont inférieures à la longueur et la largeur du plateau supérieur d'utilisation (11), de préférence elles sont inférieures d'au moins 3 cm.

Un meuble (10) selon l'invention comprend également des parois latérales (12) tombant à l'aplomb dudit plateau supérieur d'utilisation (11). Ces parois latérales (12) sont avantageusement au nombre de quatre et constituent ainsi les faces latérales du meuble (10).

Selon un mode de réalisation particulier, les éléments de structures d'un meuble (10) selon l'invention, que sont le socle (13), les parois latérales (12) et le plateau supérieur d'utilisation (11) sont réalisés en métal, en plastique ou encore en bois, de préférence en bois et, de manière particulièrement préférée en bois massif ou en bois contreplaqué, ou en bois aggloméré.

Chaque paroi latérale (12) d'un meuble (10) selon l'invention comprend dans sa partie supérieure au moins une ouverture (14) apte à permettre l'entrée de l'air (A) vers l'intérieur du caisson.

Selon un mode de réalisation particulier, l'ouverture (14) dans la partie supérieure de chaque paroi latérale (12) d'un meuble (10) selon l'invention peut comprendre un préfiltre (20) apte à permettre l'entrée de l'air (A) vers l'intérieur du caisson et à retenir les grosses particules. Un tel préfiltre (20) peut être constitué d'un matériau souple alvéolaire de type mousse, par exemple du polyéther, ou encore d'un tissu.

Avantageusement, l'arrête inférieure des parois latérales (12) d'un meuble (10) selon l'invention est située à la hauteur du socle (13) et n'est pas en contact avec le sol, de telle sorte à ce qu'au moins une ouverture (16) existe entre les parois latérales (12) et le socle (13), ladite au moins une ouverture (16) permettant l'évacuation de l'air filtré dans le meuble (10) selon l'invention.

Un meuble (10) selon l'invention comprend au moins un filtre en position horizontale (21), parallèle au plateau supérieur d'utilisation (11). Un tel au moins un filtre (21) est situé en aval des ouvertures (14) des parois latérales (12) et en amont du moyen de mise en surpression (22) de l'air.

Un meuble (10) selon l'invention comprend au moins un filtre en position verticale (23), perpendiculaire au plateau supérieur d'utilisation (11) et situé en aval du moyen de mise en surpression (22) de l'air. Un tel au moins un filtre (23) est placé orthogonalement au socle (13), aux extrémités de celui-ci, et parallèlement à la paroi latérale (12) la plus proche de telle sorte à ce que l'espace situé entre ledit au moins un filtre en position verticale (23) et ladite paroi latérale (12) la plus proche parallèle forme un conduit (15) d'une largeur d'au moins 3 cm, lequel conduit est ouvert sur l'extérieur à la hauteur du socle (13) et est apte à permettre l'adduction et l'évacuation de l'air filtré par le meuble (10) selon l'invention.

Avantageusement, le meuble (10) selon l'invention comprend au moins deux filtres en position verticale (23), de préférence au moins trois filtres en position verticale (23), perpendiculaire au plateau supérieur d'utilisation (11) et situé en aval au moyen de mise en surpression (22) de l'air.

Toujours avantageusement, le meuble (10) selon l'invention comprend au moins une source de puissance électrique, de préférence un raccordement au réseau électrique domestique ou une batterie d'accumulateurs. Optionnellement, la source de puissance électrique peut être couplée à un transformateur afin de délivrer aux différents éléments du meuble (10) un courant électrique présentant des caractéristiques adaptées à leur bon fonctionnement.

L'au moins un filtre en position horizontale (21) et l'au moins un filtre en position verticale (23) d'un meuble (10) selon l'invention peuvent être de nature identique ou différente. Ces filtres peuvent être constitués d'un ou plusieurs matériaux poreux, fibreux, granulaires ou de leur mélange .

Lesdits filtres ont une épaisseur suffisante pour permettre une filtration de l'air efficace. Typiquement, lesdits filtres ont une épaisseur d'au moins 8 mm, de préférence d'au moins 10 mm et, de manière encore plus préférée, d'au moins 15 mm.

Alternativement, lesdits filtres peuvent être formés, ou non, d'une superposition de plusieurs couches d'un même matériau ou de différents matériaux. A titre d'exemple d'une superposition d'au moins deux couches, de préférence d'au moins trois couches ou quatre couches et, de manière encore plus préférée, d'au moins cinq ou six couches.

De manière avantageuse, la ou les couches de matériaux formant le filtre, présentent un profil linéaire ou en V de sorte d'augmenter la surface de filtration.

Selon un mode de réalisation particulier, l'au moins un filtre en position horizontale (21) et l'au moins un filtre en position verticale (23) d'un meuble (10) selon l'invention sont peuvent être des filtres à air à haute efficacité de type HEPA. On entend par filtre HEPA un dispositif capable de filtrer, en un passage, au moins 99,97 % des particules de diamètre supérieur ou égal à 0,3 µm.

Un meuble (10) selon l'invention comprend un moyen de mise en surpression (22) de l'air apte à permettre l'écoulement de l'air à travers le caisson. Par « écoulement de l'air à travers le caisson », on entend l'aspiration de l'air extérieur dans la cavité du meuble (10), son passage à travers les différents filtres, et son évacuation vers l'extérieur. Avantageusement, un tel moyen de mise en surpression (22) de l'air peut prendre la forme d'un ventilateur ou d'une turbine. De préférence, un tel moyen de mise en surpression (22) de l'air est une turbine.

Un tel moyen de mise en surpression (22) de l'air est de manière avantageuse relié à la source de puissance électrique.

Toujours de manière avantageuse, le moyen de mise en surpression (22) de l'air d'un meuble (10) selon l'invention est apte à permettre l'aspiration de l'air, son passage à travers les différents filtres et son évacuation avec un débit de fonctionnement compris entre 100 et 5 000 m³/h, de préférence entre 200 et 2 000 m³/h.

Selon un mode de réalisation particulier, un meuble (10) selon l'invention peut comprendre un ionisateur. Un tel ionisateur est relié à la source de puissance et est situé de préférence entre l'au moins un filtre en position horizontale (21) et l'au moins un filtre en position verticale (23).

Avantageusement un ionisateur compris dans un meuble (10) selon l'invention peut prendre la forme d'au moins une cellule plasma à effet corona comprenant une électrode polarisée sensiblement en forme d'aiguille et une électrode de terre, disposée en regard de l'électrode polarisée, comprenant un cylindre sensiblement centré sur l'électrode polarisée et un film poreux sensiblement plan perpendiculaire à l'électrode polarisée. Un tel ionisateur est ainsi apte à générer un plasma que le flux d'air viendrait traverser, ce qui permettait de charger électriquement les particules présentes dans l'air afin que celles-ci soient retenues dans au moins un filtre électrostatique. Un tel ionisateur est bien connu de l'homme du métier.

Selon un mode de réalisation particulier, ledit au moins un filtre électrostatique d'un ionisateur d'un meuble (10) selon l'invention est réalisé en matière minérale tel que le verre ou la céramique, et de manière particulièrement préférée en fibre de verre.

A titre d'exemple, un tel ionisateur est décrit dans le brevet français FR 3065615.

Dans le cas où le meuble (10) selon l'invention comprendrait un tel ionisateur, la source de puissance électrique sera choisie de telle manière à pouvoir délivrer une tension suffisante pour que l'ionisateur puisse générer un plasma. Il est ainsi entendu que la source de puissance électrique peut inclure un transformateur permettant d'élever la tension du courant.

Avantageusement, dans le cas où un meuble (10) selon l'invention comprend un ionisateur, un meuble (10) selon l'invention comprend un filtre situé en aval de l'ionisateur apte à retenir les particules ionisées afin de permettre leur dégradation par réaction avec l'ozone créée par l'ionisateur.

Toujours avantageusement, dans le cas où un meuble (10) selon l'invention comprend un ionisateur, un meuble (10) selon l'invention comprend également un catalyseur en aval dudit ionisateur, apte à décomposer l'ozone produit lors de l'ionisation. Un tel catalyseur peut être choisi parmi le charbon actif, la zéolithe ou l'oxyde de manganèse (MnO₂), qui sont apte à permettre une décomposition rapide de l'ozone et des oxydes d'azote à température ambiante. Un tel catalyseur prend de manière préférée la forme d'un substrat en nid d'abeille, par exemple en aluminium, lequel est recouvert d'oxyde de manganèse. Avantageusement, un tel substrat en nid d'abeille devra présenter une épaisseur d'au moins 10 mm pour présenter une efficacité suffisante dans la neutralisation de l'ozone.

Selon un mode de réalisation particulier, au moins une des parois latérales (12) est mobile et apte à permettre l'accès à l'intérieur du caisson, de préférence à permettre d'accéder et de remplacer les filtres disposés à l'intérieur du caisson.

Ladite au moins une paroi latérale (12) mobile peut comprendre, ou non, au moins une charnière la reliant au meuble (10) et apte à permettre son pivotement.

De manière avantageuse, ladite au moins une paroi latérale (12) mobile comprend un moyen de préhension, par exemple une poignée permettant à un utilisateur d'ouvrir la paroi latérale (12) mobile afin d'accéder à l'intérieur du caisson.

Avantageusement, aucun filtre vertical n'est présent directement derrière ladite au moins une paroi latérale (12) mobile, laquelle entre directement en contact avec le socle (13) à son extrémité inférieure. Aucun conduit (15), ni ouverture (16) permettant la sortie d'air n'est donc présent à la base d'une telle paroi latérale (12) mobile.

Selon un autre mode de réalisation particulier, le meuble (10) selon l'invention comprend un dispositif de transmission d'énergie sans fil relié à la source de puissance électrique. Un tel dispositif est inclus de préférence dans le plateau supérieur d'utilisation (11). On entend par dispositif de transmission d'énergie sans fil un dispositif apte à transférer de l'énergie par couplage électromagnétique (induction). A titre d'exemple, un tel dispositif de transmission d'énergie sans fil est apte à permettre le chargement d'un appareil mobile compatible, tel qu'un téléphone. Avantageusement, un tel dispositif de transmission d'énergie sans fil répond au standard QI défini par le WIRELESS POWER CONSORTIUM.

Selon un autre mode de réalisation particulier, le meuble (10) selon l'invention comprend une enceinte (31) reliée à la source de puissance électrique. Une telle enceinte (31) est constituée par au moins un haut-parleur monté sur une des parois latérales, de préférence sur la paroi latérale (12) mobile si une telle paroi existe. Le meuble (10) peut ainsi avantageusement servir de caisse de résonnance.

Selon un mode de réalisation particulier, un meuble (10) selon l'invention peut comprendre des roulettes. On entend par roulette une petite roue typiquement montée dans une chape mobile autour d'un axe vertical, apte à permettre le déplacement de l'objet auquel elle est fixée. De manière avantageuse, quatre roulettes sont fixées au socle (13) et permettent un déplacement aisé du meuble (10). De manière particulièrement avantageuse, les roulettes utilisables dans un meuble (10) selon l'invention présentent un moyen de blocage apte à prévenir tout mouvement impromptu du meuble (10).

Avantageusement, un meuble (10) selon l'invention comprend un interrupteur (30) apte à commander l'alimentation électrique des moyens de purification de l'air dudit meuble (10). Par « moyens de purification de l'air », on entend le moyen de mise en surpression (22) et l'éventuel ionisateur. Alternativement, un tel interrupteur (30) peut être commandé à distance, par exemple à l'aide d'une télécommande.

De manière avantageuse, un meuble (10) selon l'invention comprend un programmateur. On entend par programmateur un système mécanique ou électronique, par exemple une unité centrale de traitement, capable de commander le fonctionnement des moyens de purification de l'air dudit meuble (10), sur des plages temporelles prédéfinies.

Selon un mode de réalisation particulier, ledit interrupteur (30) est un interrupteur (30) temporisé apte à permettre le réglage par l'utilisateur de la durée de fonctionnement des moyens de purification de l'air.

Selon un mode de réalisation alternatif, un meuble (10) selon l'invention peut comprendre au moins un capteur apte à mesurer la qualité de l'air ambiant. De manière non exhaustive, le au moins un capteur d'un meuble (10) selon l'invention peut être un capteur de composés organiques volatils (COV), un capteur de particules fines, par exemple un capteur de particules fines dont le diamètre est inférieur à 10 µm (PM 10) et/ou un capteur de particules fines dont le diamètre est inférieur à 2,5 µm (PM 2.5), un capteur de dioxyde de carbone, un capteur de monoxyde de carbone, un capteur de dioxygène.

Avantageusement, le au moins un capteur d'un meuble (10) selon l'invention transmet les mesures qu'il réalise à une unité centrale de traitement apte à commander le fonctionnement des moyens de purifications de l'air (le moyen de mise en surpression (22) et l'éventuel ionisateur) lorsque les valeurs mesurées franchissent une valeur seuil prédéterminée.

Selon un second aspect, l'invention concerne un procédé de filtration de l'air caractérisé en ce qu'il comprend au moins les étapes suivantes :
i) mise en place d'un meuble (10) selon l'invention dans une pièce, et
ii) mise en route du moyen de surpression de l'air (22) relié à la source de puissance.

Avantageusement, la mise en place d'un meuble (10) selon l'invention dans une pièce se fera contre un mur de ladite pièce.

Toujours avantageusement, un procédé de filtration de l'air selon l'invention peut être mis en oeuvre de manière efficace dans une pièce ayant une surface inférieure à 75 m², de préférence inférieure à 50 m², de manière encore plus préférée inférieure à 25 m².

On entend par mise en oeuvre de manière efficace d'un procédé de filtration de l'air selon l'invention l'obtention d'un air ambiant de bonne qualité en un temps donné. La bonne qualité de l'air ambiant peut être évaluée sur la base de différents paramètres, et à titre d'exemple la concentration en composés organiques volatils (COV), la concentration en particules fines, telle que la concentration en particules fines dont le diamètre est inférieur à 10 µm (PM 10) et/ou la concentration en particules fines dont le diamètre est inférieur à 2,5 µm (PM 2.5), etc.

Selon un dernier aspect, l'invention concerne une utilisation d'un meuble (10) selon l'invention pour la filtration de l'air.

## Revendications

1. Un meuble (10) destiné à la purification de l'air et prenant la forme d'un caisson sensiblement fermé comprenant
• a) au moins un plateau supérieur d'utilisation (11), lequel présente de préférence un contour rectangulaire,
• b) des parois latérales (12) tombant à l'aplomb de ce plateau,
• c) au moins une ouverture (14) dans la partie supérieure des parois latérales (12), laquelle permet l'entrée de l'air (A) vers l'intérieur du caisson,
• d) au moins ouverture (16) dans la partie basse du caisson, de préférence derrière les parois latérales (12), laquelle permet la sortie de l'air filtré (B) dans le caisson,
• e) au moins une source de puissance électrique,
• f) au moins un moyen de mise en surpression (22) de l'air relié à la source de puissance et permettant d'assurer l'écoulement de l'air à travers le caisson,
• g) au moins un filtre en position horizontale (21), parallèle au plateau supérieur d'utilisation (11) et situé en amont du moyen de mise en surpression (22) de l'air,
• h) au moins un filtre en positon verticale (23), perpendiculaire au plateau supérieur d'utilisation (11) et situé en aval du moyen de mise en surpression (22) de l'air, lequel est distant d'au moins 3 cm de la paroi latérale (12) la plus proche,
• i) au moins un conduit (15) entre l'au moins un filtre (23) situé en aval du moyen de mise en surpression (22) de l'air et la paroi latérale (12) la plus proche, lequel conduit (15) permet l'évacuation de l'air filtré vers l'ouverture (16) de la partie basse du caisson.

2. Le meuble (10) selon la revendication 1, **caractérisé en ce que** le moyen de mise en surpression (22) de l'air permet d'obtenir un débit de fonctionnement compris entre 100 et 5 000 m³/h, de préférence entre 200 et 2 000 m³/h.

3. Le meuble (10) selon l'une quelconque des revendications 1 ou 2, **caractérisée en ce qu'**il est destiné à être placé à distance des murs, et l'ensemble de ses parois latérales (12) comprennent une ouverture (14) dans leur partie supérieure.

4. Le meuble (10) selon l'une quelconque des revendications 1 à 3, **caractérisé en ce qu'**au moins une des parois latérales (12) est mobile et apte à permettre l'accès à l'intérieur du caisson, de préférence à permettre d'accéder et de remplacer les filtres disposés à l'intérieur du caisson.

5. Le meuble (10) selon l'une quelconque des revendications 1 à 4, **caractérisé en ce qu'**il comprend au moins deux filtres (23), de préférence au moins trois filtres (23) en position verticale, perpendiculaires au plateau supérieur d'utilisation (11) et situé en aval du moyen de mise en surpression (22) de l'air.

6. Le meuble (10) selon l'une quelconque des revendications 1 à 5, **caractérisé en ce qu'**il comprend en outre :
• j) au moins un ionisateur relié à la source de puissance, lequel ionisateur est situé de préférence entre l'au moins un filtre en position horizontale (21) et l'au moins un filtre en position horizontale (23).

7. Le meuble (10) selon l'une quelconque des revendications précédentes **caractérisé en ce qu'**il comprend en outre, sur le plateau supérieur d'utilisation (11), au moins un dispositif de transmission d'énergie sans fil relié à la source de puissance électrique.

8. Le meuble (10) selon l'une quelconque des revendications précédentes **caractérisé en ce qu'**il comprend en outre au moins une enceinte (31) reliée à la source de puissance électrique.

9. Un procédé de filtration de l'air **caractérisé en ce qu'**il comprend au moins les étapes suivantes :
• i) mise en place d'un meuble (10) tel que défini à l'une quelconque des revendications 1 à 8 dans une pièce, et
• ii) mise en route du moyen de surpression (22) de l'air relié à la source de puissance.

10. Une utilisation d'un meuble (10) tel que défini à l'une quelconque des revendications 1 à 8 pour la filtration de l'air.

## Patentansprüche

1. Zur Luftreinigung bestimmtes Möbel (10), das die Form eines im Wesentlichen geschlossenen Kastens hat, umfassend:
• a) mindestens eine obere Nutzplatte (11), die vorzugsweise eine rechteckige Umfangslinie aufweist,
• b) Seitenwände (12), die von dieser Platte senkrecht abfallen,
• c) mindestens eine Öffnung (14) im oberen Teil der Seitenwände (12), die den Lufteintritt (A) ins Innere des Kastens erlaubt,
• d) mindestens eine Öffnung (16) im unteren Teil des Kastens, vorzugsweise hinter den Seitenwänden (12), die den Austritt der im Kasten gefilterten Luft (B) erlaubt,
• e) mindestens eine Quelle elektrischen Stromes,
• f) mindestens ein Mittel zur Herstellung eines Luftüberdruckes (22), mit der Stromquelle verbunden und erlaubend, die Luftströmung durch den Kasten sicherzustellen,
• g) mindestens einen Filter in horizontaler Stellung (21), parallel zur oberen Nutzplatte (11) und vor dem Mittel zur Herstellung eines Luftüberdruckes (22) angeordnet,
• h) mindestens einen Filter in vertikaler Stellung (23), senkrecht zur oberen Nutzplatte (11) und nach dem Mittel zur Herstellung eines Luftüberdruckes (22) angeordnet, der mindestens 3 cm von der nächstliegenden Seitenwand (12) entfernt ist,
• i) mindestens eine Leitung (15) zwischen dem mindestens einen Filter (23), der nach dem Mittel zur Herstellung eines Luftüberdruckes (22) angeordnet ist, und der nächstliegenden Seitenwand (12), wobei diese Leitung (15) das Ausleiten der gefilterten Luft zur Öffnung (16) im unteren Teil des Kastens erlaubt.

2. Möbel (10) nach Patentanspruch 1, **dadurch gekennzeichnet, dass** das Mittel zur Herstellung eines Luftüberdruckes (22) eine Betriebsdurchflussleistung zwischen 100 und 5000 m³/h zu erzielen erlaubt, vorzugsweise zwischen 200 und 2000 m³/h.

3. Möbel (10) nach irgendeinem der Patentansprüche 1 oder 2, **dadurch gekennzeichnet, dass** es dazu bestimmt ist, mit Abstand von den Wänden aufgestellt zu werden, und alle seine Seitenwände (12) eine Öffnung (14) in ihrem oberen Teil aufweisen.

4. Möbel (10) nach irgendeinem der Patentansprüche 1 bis 3, **dadurch gekennzeichnet, dass** mindestens eine der Seitenwände (12) beweglich ist und in der Lage, den Zugang zum Inneren des Kastens zu gewähren, vorzugsweise den Zugang zu den im Inneren des Kastens angeordneten Filtern und deren Austausch zu erlauben.

5. Möbel (10) nach irgendeinem der Patentansprüche 1 bis 4, **dadurch gekennzeichnet, dass** es mindestens zwei Filter (23), vorzugsweise mindestens drei Filter (23) in vertikaler Stellung umfasst, die zur oberen Nutzplatte (11) senkrecht stehen und nach dem Mittel zur Herstellung des Luftüberdruckes (22) angeordnet sind.

6. Möbel (10) nach irgendeinem der Patentansprüche 1 bis 5, **dadurch gekennzeichnet, dass** es außerdem umfasst:
• j) mindestens einen lonisator, der mit der Stromquelle verbunden ist, wobei sich dieser lonisator vorzugsweise zwischen dem mindestens einen Filter in horizontaler Stellung (21) und dem mindestens einen Filter in vertikaler Stellung (23) befindet.

7. Möbel (10) nach irgendeinem der vorangehenden Patentansprüche, **dadurch gekennzeichnet, dass** es außerdem an der oberen Nutzplatte (11) eine Vorrichtung zur drahtlosen Energieübertragung umfasst, die mit der Stromquelle verbunden ist.

8. Möbel (10) nach irgendeinem der vorangehenden Patentansprüche, **dadurch gekennzeichnet, dass** es außerdem mindestens eine Lautsprecherbox (31) umfasst, die mit der Stromquelle verbunden ist.

9. Verfahren zur Luftreinigung, **dadurch gekennzeichnet, dass** es mindestens die folgenden Schritte umfasst:
• i) Aufstellen eines Möbels (10) nach irgendeinem der Patentansprüche 1 bis 8 in einem Raum, und
• ii) Einschalten des mit der Stromquelle verbundenen Mittels zur Herstellung des Luftüberdruckes (22)

10. Gebrauch eines Möbels (10) nach irgendeinem der Patentansprüche 1 bis 8 zur Luftfilterung.

## Claims

1. A piece of furniture (10) for air purification and in the form of a substantially closed cabinet comprising
• a) at least one upper purpose tray (11), which preferably has a rectangular outline,
• b) side walls (12) in vertical alignment below this tray,
• c) at least one opening (14) in the top part of the side walls (12), which allows air (A) to enter the inside of the cabinet,
• d) at least one opening (16) in the bottom part of the cabinet, preferably behind the side walls (12), which allows the filtered air (B) to exit the cabinet,
• e) at least one electrical power source,
• f) at least one air overpressurization means (22) connected to the power source and allowing the air to flow through the cabinet,
• g) at least one horizontally positioned filter (21), parallel to the upper purpose tray (11) and located upstream of the air overpressurization means (22),
• h) at least one vertically positioned filter (23), perpendicular to the upper purpose tray (11) and located downstream of the air overpressurization means (22), which is at least 3 cm away from the nearest side wall (12),
• i) at least one duct (15) between the at least one filter (23) located downstream of the air overpressurization means (22) and the nearest side wall (12), which duct (15) allows the filtered air to be discharged towards the opening (16) of the bottom part of the cabinet.

2. The piece of furniture (10) according to claim 1, **characterized in that** the air overpressurization means (22) allows the obtaining of an operating flow rate between 100 and 5000 m³/h, preferably between 200 and 2000 m3/h.

3. The piece of furniture (10) according to any one of claims 1 or 2, **characterized in that** it is intended to be placed at a distance from the walls, and all of its side walls (12) comprise an opening (14) in their top part.

4. The piece of furniture (10) according to any one of claims 1 to 3, **characterized in that** at least one of the side walls (12) is movable and capable of allowing access to the inside of the cabinet, preferably allowing access to and replacement of the filters arranged inside the cabinet.

5. The piece of furniture (10) according to any one of claims 1 to 4, **characterized in that** it comprises at least two vertically positioned filers (23), preferably at least three vertically positioned filters (23), perpendicular to the upper purpose tray (11) and located downstream of the air overpressurization means (22).

6. The piece of furniture (10) according to any one of claims 1 to 5, **characterized in that** it further comprises:
• j) at least one ionizer connected to the power source, which ionizer is preferably located between the at least one horizontally positioned filter (21) and the at least one vertically positioned filter (23).

7. The piece of furniture (10) according to any one of the preceding claims, **characterized in that** it further comprises, on the upper purpose tray (11), at least one wireless power transmission device connected to the electrical power source.

8. The piece of furniture (10) according to any one of the preceding claims, **characterized in that** it further comprises at least one enclosure (31) connected to the electrical power source.

9. An air filtration method **characterized in that** it comprises at least the following steps:
• i) placing a piece of furniture (10) as defined in any one of claims 1 to 8 in a room, and
• ii) starting up the air overpressurization means (22) connected to the power source.

10. A use of a piece of furniture (10) as defined in any one of claims 1 to 8 for air filtration.
